Europäisches Patentamt

European Patent Office

Office européen des brevets

(19)

(11) Veröffentlichungsnummer : **0 027 525**
**B1**

(12) # EUROPÄISCHE PATENTSCHRIFT

(45) Veröffentlichungstag der Patentschrift :
24.08.83

(21) Anmeldenummer : 80105177.2

(22) Anmeldetag : 07.09.80

(51) Int. Cl.³ : **G 01 N 27/90**

(54) Prüfsondenanordnung zum Abtasten der Oberfläche eines metallischen Prüfteiles.

(30) Priorität : 18.09.79 DE 2937650

(43) Veröffentlichungstag der Anmeldung :
29.04.81 Patentblatt 81/17

(45) Bekanntmachung des Hinweises auf die Patenterteilung : 24.08.83 Patentblatt 83/34

(84) Benannte Vertragsstaaten :
FR GB IT SE

(56) Entgegenhaltungen :
DE A 1 773 501
DE A 2 326 391
DE A 2 509 927
US A 3 535 625

Patents Abstracts of Japan, Band 2, no 64, 17.
Mai 1978 Seite 2052E78

(73) Patentinhaber : Institut Dr. Friedrich Förster Prüfgerätebau GmbH & Co. KG
Postfach 925 in Laisen 70
D-7410 Reutlingen 1 (DE)

(72) Erfinder : Bötzel, Heinz
Sommerhalde 8
D-7400 Tübingen (DE)

# Prüfsondenanordnung zum Abtasten der Oberfläche eines metallischen Prüfteiles

Die Erfindung betrifft eine Prüfsondenanordnung zum Abtasten der Oberfläche eines metallischen Prüfteiles in einer bestimmten vorgegebenen Abtastrichtung auf Fehler, wie sie in den Oberbegriffen von Anspruch 1 bzw. 11 definiert ist.

Als Anwendungsgebiet für eine derartige Prüfsondenanordnung ist dabei vorzugsweise die Prüfung von metallischen Rohlingen wie Brammen, Knüppel und dgl. gedacht. Hierbei kommt es u. a. darauf an, Risse von beliebiger Winkellage in Bezug auf die Abtastrichtung innerhalb eines beträchtlichen Tiefenbereiches mit hoher Zuverlässigkeit richtig zu bewerten.

Nach DE-A 2 509 927 benutzt man dabei einen Satz stationärer, quer zur Fortbewegungsrichtung nebeneinander angeordneter Prüfsonden und mindestens eine quer zur Fortbewegungsrichtung oszillierende Prüfsonde. Sowohl die stationären als auch die oszillierenden Prüfsonden erfassen dabei Fehler innerhalb eines gewissen Bereiches von Winkellagen mit gleichbleibender Empfindlichkeit. Die Bereiche sind in der Weise ausgewählt worden, daß sie gemeinsam für die Erfassung von Fehlern aller möglichen Winkellagen innerhalb der 360° des Vollkreises ausreichen. Bei den eingesetzten Prüfsonden handelt es sich um ein Luftspulensystem mit je einer Erreger- und einer Empfängerspule, die durch senkrechte Anordnung der jeweiligen Spulenachsen gegeneinander entkoppelt sind. Durch eine besondere Gestaltung der Prüfsonden war es möglich für einen großen Bereich von Winkellagen der Fehler Signale konstanter Empfindlichkeit zu erhalten.

Mit den beschriebenen Prüfsonden konnten im allgemeinen gute Ergebnisse erzielt werden. Indessen hat sich gezeigt, daß für Fehler begrenzter Länge die Proportionalität zwischen Fehlertiefe und Fehlersignal bei größeren Fehlertiefen ihre Grenze hat, ja daß sogar ein Abfall des Fehlersignals mit weiterem Anstieg der Fehlertiefe auftreten kann. Dies wird darauf zurückgeführt, daß die Wirbelströme im Prüfteil sich nicht mehr ausschließlich unter dem Riß schließen sondern Wege seitlich um den Riß herum suchen. Bei Fehlern unendlicher Länge tritt das angegebene Verhalten nicht auf.

Aus DE-A 1 773 501 ist eine Wirbelstromprüfsonde mit einem Ferritkern bekannt, der vier auf das Prüfgut gerichtete Arme besitzt und aus einem handelsüblichen E-Kern hergestellt wurde, indem man dessen Mittelsteg durch einen Schlitz in Längsrichtung des E-Kernes in zwei Arme aufteilte. Die beiden so entstandenen Arme tragen miteinander in Differenz geschaltete Empfängerwicklungen, während auf den äußeren Armen Erregerwicklungen angebracht sind. In der gleichen Druckschrift wird eine Wirbelstromprüfsonde beschrieben, deren zylindrischer Ferritkern in zwei durch Aufschlitzen desselben hergestellte, auf das Prüfgut gerichtete Arme mündet. Auch hier sind die beiden Arme mit Empfängerwicklungen in Differenzschaltung versehen, während auf dem zylindrischen Schaft des Ferritkernes eine Erregerwicklung angebracht ist. Solche Sonden werden zur Abtastung der Prüfgutoberfläche in Richtung senkrecht zum Schlitz eingesetzt und besitzen eine hohe Empfindlichkeit gegenüber Fehlern, die in der Richtung des Schlitzes verlaufen. Für von dieser Richtung abweichende Wickellagen der Fehler fällt jedoch die Empfindlichkeit steil ab.

In US-A 3 535 625 ist eine Wirbelstromprüfsonde dargestellt, die wiederum einen E-förmigen Kern aus ferromagnetischem Material benutzt. Den beiden äußeren Armen des E-förmigen Kernes sind in Differenz geschaltete Empfängerwicklungen und dem mittleren Arm eine Erregerwicklung zugeordnet. Prüfsonden dieser Art werden im allgemeinen in der Längsrichtung ihres E-Kernes voranbewegt und sind empfindlich gegenüber Fehlern, die senkrecht zu dieser Richtung verlaufen. Auch hier geht die Empfindlichkeit rasch zurück, wenn sich die Winkellage der Fehler gegenüber dem genannten Verlauf ändert.

Zu der genannten nachteiligen Eigenschaft der beschriebenen Prüfsonden kann noch eine weitere hinzutreten. Häufig werden zum Unterdrücken langsam verlaufender Störgrößen bei der Auswertung der Signale von Prüfsonden Hochpaßfilter eingesetzt. Da jedoch im allgemeinen bei schräg zur Senkrechten der Abtastrichtung verlaufenden Fehlern sich Prüfsignale mit einem niedrigeren Frequenzspektrum ergeben, verursacht ein Hochpaßfilter für solche Fehler einen weiteren Abfall der Signalhöhe. In diesem Falle ist es demnach wünschenswert, daß die ungefilterten Signale von Fehlern mit Schräglage zur Senkrechten der Abtastrichtung einen Anstieg der Signalhöhe gegenüber gerade verlaufenden Fehlern aufweisen.

Die Erfindung stellt sich die Aufgabe eine Prüfsondenanordnung gemäß dem eingangs definierten Gattungsbegriff zu schaffen, deren Signale bei Abweichen der Winkellage der Fehler von der Senkrechten zur Abtastrichtung in einem gegebenen Bereich möglichst wenig abfallen oder sogar noch zunehmen.

Die Aufgabe wird gelöst durch eine Prüfsondenanordnung gemäß Anspruch 1 bzw. Anspruch 11. Vorteilhafte Ausgestaltungen der Lösung ergeben sich aus den abhängigen Ansprüchen 2-10.

Nach der erfindungsgemäßen Lösung ist es möglich, Prüfsondenanordnungen herzustellen, deren Signale innerhalb eines Bereiches von ± 45° Schräglage der Fehler gegenüber der Senkrechten zur Abtastrichtung nur wenig abfallen oder sogar ansteigen. Gegenüber den oben beschriebenen Prüfsonden gemäß DE-A 2 509 927 ergibt sich der Vorteil, daß auch bei sehr großen Rißtiefen und bei Rißlängen, die nur relativ wenig über die seitlichen Abmessungen der Prüfsonden hinausgehen, noch ein deutliches Ansteigen der Signalhöhe mit weiterer Zunahme der Rißtiefe stattfindet. Unabhängig von der Rißtiefe ergeben bereits Risse, deren Länge nicht weit über die seitlichen Abmessungen der Prüfsonde hinausgeht, die gleichen Signalhöhen wie Risse unendlicher Länge. Ein weiterer Vorteil besteht darin, daß verschiedene Störgrößen wie Abstands- und Ausrichtungsschwankungen der Prüfsonden gegenüber der Prüfteiloberfläche oder langsame Änderungen der Prüfteiloberfläche durch Rillen, Löcher o. ä. geringere Störsignale zur Folge haben, als es bei den bisherigen Prüfsonden der Fall war. Darüberhinaus weisen diese Störsignale eine von der Phasenrichtung der Nutzsignale abweichende Phasenrichtung auf und sind so leichter zu unterdrücken. Ferner wirkt es sich sehr günstig aus, daß die erfindungsgemäßen Prüfsonden durch magnetische Störfelder wesentlich weniger beeinflußt werden, als die Prüfsonden nach DE-A 2 509 927. Insbesondere zeigen stationäre Prüfsonden eine geringere Empfindlichkeit gegenüber von oszillierenden Prüfsonden ausgehenden Störfeldern. Schließlich soll noch vermerkt werden, daß eine zwischen Prüfsondenanordnung und Prüfteil gelegte Verschleißplatte aus amagnetischem Metall geringer elektrischer Leitfähigkeit, die sich zum Schutz der Prüfsondenanordnung als unentbehrlich erwiesen hatte und die bei den bisherigen Prüfsonden unvorteilhafte Phasenänderungen bewirkt hatte, auf die erfindungsgemäßen Prüfsonden keinen schädlichen Einfluß ausübt.

Im folgenden wird die Erfindung an Hand von Beispielen und mit Hilfe einiger Figuren näher erläutert. Es zeigen im einzelnen :

Figur 1a, b eine erfindungsgemäße Prüfsondenanordnung mit einer Prüfsonde

Figur 2a, b eine Prinzipskizze einer Prüfsonde

Figur 3 eine alternative Prüfsonde

Figur 4 ein Schaubild zu den obigen Prüfsonden

Figur 5 eine Prüfsondenanordnung mit drei Prüfsonden

Figur 6a, b eine weitere alternative Prüfsonde.

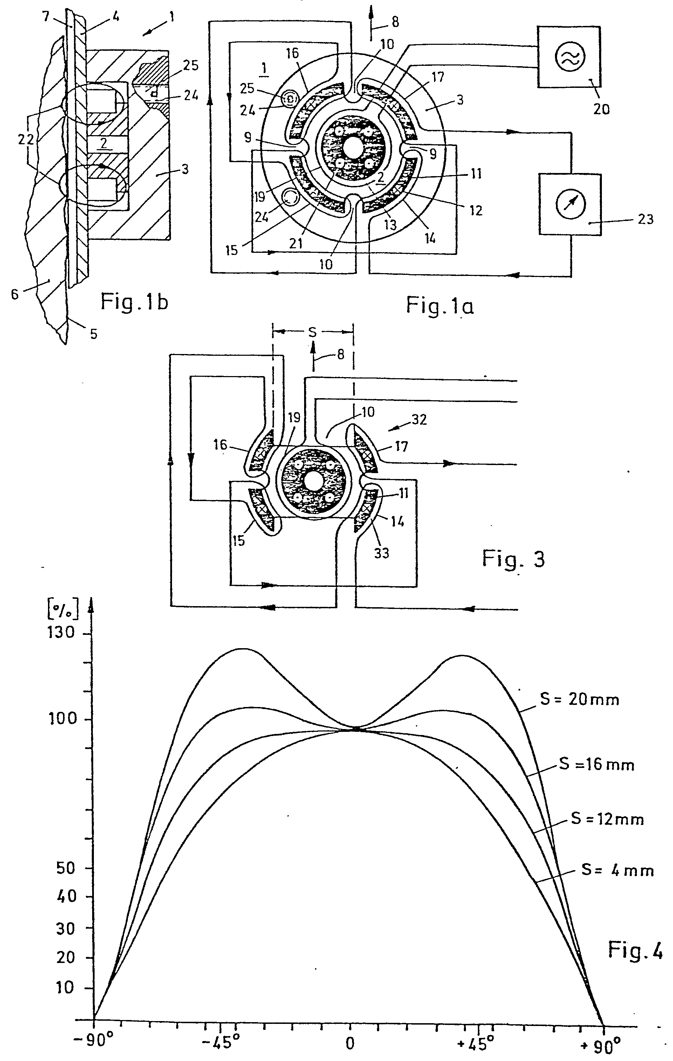

In Figur 1a und 1b ist eine besonders vorteilhafte Ausführungsform der Erfindung dargestellt. Die nach Figur 1a in einer halbschematischen Unteransicht und nach Figur 1b in einem seitlichen Schnitt abgebildete Prüfsondenanordnung 1 besteht aus einer Prüfsonde 2, die in einen Block 3 aus Kunststoff eingegossen ist, und aus einem Gehäuse, in das die Prüfsonde 2 eingebaut ist und von dem hier nur eine vor der Prüfsonde befindliche Wand 4 zu sehen ist. Die letztere schützt die Prüfsonde 2 vor Beschädigungen und muß für die von der Prüfsonde ausgehenden magnetischen Wechselfelder eine gute Durchlässigkeit besitzen. Sie ist deshalb aus einem amagnetischen, elektrisch relativ schlecht leitenden Werkstoff hoher Verschleißfestigkeit hergestellt, z. B. aus austenitischem Stahl. Auf der Oberfläche 5 des zu prüfenden Werkstückes 6, z. B. einer Bramme, gleitet die Prüfsondenanordnung 1 auf Gleitkufen 7 in der Richtung von Pfeil 8. Der Kern der Prüfsonde 2 besteht aus Ferrit und ist aus der Hälfte eines kommerziell erhältlichen Schalenkernes angefertigt worden, indem man zusätzlich zu den für die Herausführung der Anschlußdrähte vorgesehenen beiden Schlitzen 9 um 90° versetzt zwei weitere, hier 4 mm breite Schlitze 10 in der äußeren Rundung des Schalenkernes angebracht hat. Auf diese Weise sind vier auf die Prüfgutoberfläche 5 gerichtete Arme 11 entstanden, deren geometrische Schwerpunkte durch kleine Kreise 12 angedeutet sind. Die letzteren liegen auf den Eckpunkten eines Rechteckes, dessen Seiten entweder in oder senkrecht zur Richtung des Pfeiles 8, der Abtastrichtung, verlaufen. In der Mitte zwischen den Armen 11 befindet sich ein Zentralarm 13, der zwar für die Ausführung der Erfindung grundsätzlich nicht erforderlich ist, aber in sehr vorteilhafter Weise eingesetzt werden kann. Die vier Arme 11 sind jeweils mit gleich aufgebauten und dimensionierten Wicklungen 14-17 versehen, von denen der Einfachheit halber nur jeweils eine Windung gezeichnet ist. Die beiden oberen Wicklungen 16, 17 sind rechtsdrehend, die beiden unteren 14, 15 linksdrehend gewickelt. Um den Zentralarm 13 ist eine weitere Wicklung 19 gelegt, deren Anschlüsse mit einem Wechselstromgenerator 20 verbunden sind. Der in Wicklung 19 fließende Strom hat einen Magnetfluß 22 im Zentralarm 13 zur Folge, der durch die Zeichen in den kleinen Kreisen 21 und 12 symbolisiert wird und der sich über die gleichsinnig durchflossenen Kerne 11, die Gehäusewand 4 und das Prüfteil 6 schließt. Dabei werden im Prüfteil 6 Wirbelströme induziert, deren sekundäre Magnetfelder auf die Prüfsonde 2 zurückwirken und in den Wicklungen 14-17 in Abhängigkeit von Fehlern im Prüfteil 6 Signale entstehen lassen. Die Wicklungen 14-17 sind in Serie geschaltet und an eine Einrichtung 23 angeschlossen, in der die Signale in bekannter Weise ausgewertet werden.

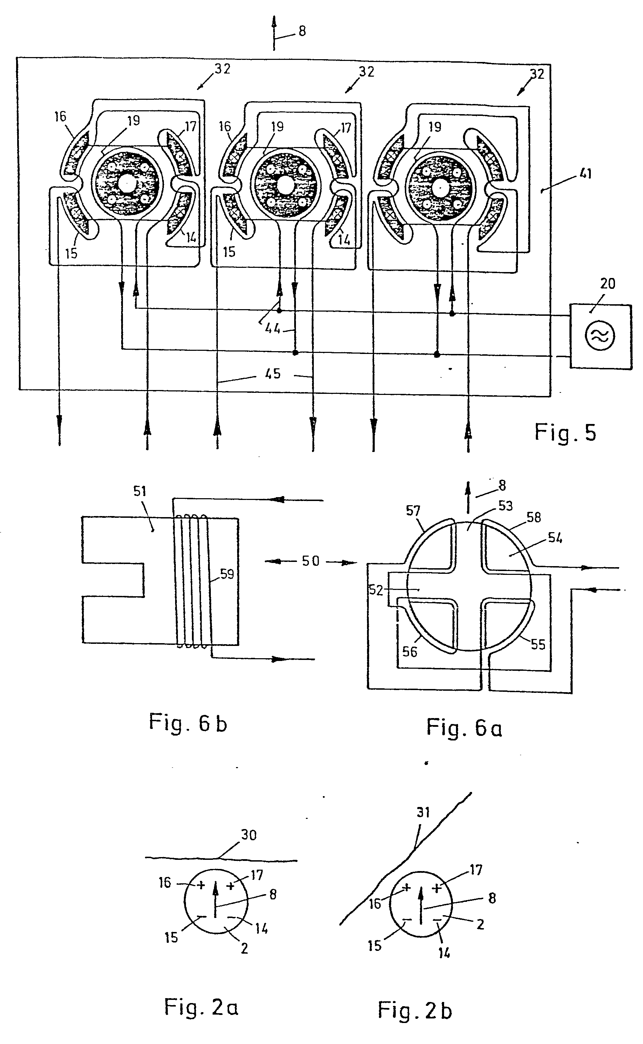

Die Arbeitsweise der Prüfsonde 2 läßt sich am besten an Hand der Prinzipskizzen 2a und 2b erläutern, in denen Plus- und Minuszeichen den Ort und die Polarität der Wicklungen 14-17 andeuten. Durch die Serienschaltung der gegensinnig gepolten Wicklungen 14, 15 bzw. 16, 17 gelangt an den Eingang der Auswerteeinrichtung 23 nur dann ein Signal, wenn das Gleichgewicht der Wicklungen durch unterschiedliche Wirbelstromrückwirkungen auf Wicklungen ungleicher Polarität gestört wird. Beim Überlaufen des auf der Abtastrichtung gemäß Pfeil 8 senkrecht stehenden Risses 30 durch die Prüfsonde 2 begegnet der Riß zunächst den beiden positiv gepolten Wicklungen 16, 17, dann den beiden negativ gepolten Wicklungen 14, 15. Es entsteht ein bipolares Fehlersignal mit Nulldurchgang wie bei einer einfachen Differenzsonde. Beim Überlaufen des mit 45° zur Abtastrichtung geneigten Risses 31 nach Figur 2b steht der Riß zunächst der positiv gepolten Wicklung 16, dann der neutralen Kombination der Wicklungen 15, 17 und schließlich der negativ gepolten Wicklung 14 gegenüber.

Das so entstandene Fehlersignal ähnelt der Form nach dem vorherigen, weist jedoch wegen des größeren Abstandes zwischen den Wicklungen 16 und 14 einen größeren Abstand zwischen positivem und negativem Maximum und damit eine niedrigere Signalfrequenz auf. Die Vergrößerung des Abstandes führt zu einer Anhebung des Gradienten und damit der Signalhöhe, die zwar nur teilweise wirksam wird, weil an der Differenzbildung nur jeweils eine Wicklung beteiligt ist. Immerhin ergibt sich jedoch, daß bei $\pm 45°$ Schräglage des Fehlers das Prüfsignal gegenüber geradem Fehlerverlauf nur auf ca. 77 % zurückgeht.

Zum Abgleich der Restspannung sind in der Nähe der beiden Wicklungen 15 und 16 Gewindehülsen 24 aus Kunststoff in den Block 3 miteingegossen worden. Je nach Bedarf wird in die obere oder untere Gewindehülse 24 ein kleiner Ferritgewindekern 25 soweit eingeschraubt bis bei freistehender Prüfsonde 2 am Ausgang der Empfängerwicklungen 14-17 die Restspannung auf Null geht.

Figur 3 zeigt eine gegenüber der zuvor besprochenen abgeänderte Prüfsonde 32. Bei ihr wurde der Schlitz 10 von bisher 4 mm auf 20 mm vergrößert, während alles übrige im wesentlichen unverändert blieb. Dadurch ergeben sich Arme 33 mit verringerter Querschnittsfläche. Die Schwerpunkte der letzteren, durch kleine Kreise 33 markiert, liegen nach wie vor auf den Eckpunkten eines Rechteckes, dessen zur Abtastrichtung senkrechte Seiten jetzt jedoch eine größere Länge als die beiden übrigen Seiten des Rechteckes erhalten haben. Prüfsonde 32 weist gegenüber schräg zur Senkrechten der Abtastrichtung verlaufenden Fehlern eine wesentlich höhere Empfindlichkeit auf. Bei einer Schräglage der Fehler von $\pm 45°$ beträgt der Anstieg der Signalhöhe 25 % gegenüber der Signalhöhe eines gerade verlaufenden Fehlers.

In Figur 4 sind für eine Reihe unterschiedlich breiter Schlitze 10 die Signalhöhen der Fehlersignale in Abhängigkeit von der Winkellage der Fehler gegenüber der Senkrechten zur Abtastrichtung nach Pfeil 8 aufgetragen. Es zeigt sich, daß der Grad der Anhebung der Empfindlichkeit gegenüber schräg verlaufenden Fehlern innerhalb gewisser Grenzen beliebig gewählt werden kann durch entsprechende Dimensionierung der Breite « S » des Schlitzes 10. Auf diese Weise wird es ohne weiteres möglich, zusätzliche Verluste der Empfindlichkeit gegenüber schräg verlaufenden Fehlern, die bei Einsatz von Hochpaßfiltern eintreten, durch die Dimensionierung der Schlitzbreite « S » auszugleichen.

Gegenüber den bisher in vielen Fällen eingesetzten Luftspulen zeigen die Prüfsonden 2 und 32 bemerkenswerte Vorteile. Bereits bei Rissen einer Länge von 60 mm, die also nur um 15 mm die hier dargestellten Prüfsonden beiderseitig überragen, ergeben sich praktisch die gleichen Signalhöhen wie bei unendlich langen Rissen. Die Signalhöhen von nur 60 mm langen Rissen steigen auch bei Rißtiefen von 40 mm und mehr mit wachsender Rißtiefe noch merklich an. Schwankungen des Abstandes zwischen Prüfsonde und Prüfteiloberfläche, des Aufsatzwinkels der Prüfsonde gegenüber der Prüfteiloberfläche, ferner die bei Metallrohlingen üblichen Unebenheiten der Oberfläche rufen nur geringfügige Störsignale hervor, die zudem 50-70° in der Phase von dem Nutzsignal eines Risses abweichen, so daß sie durch die bekannten Maßnahmen der Phasenselektion eliminiert werden können. Die Beeinflußbarkeit durch magnetische Störfelder bleibt gering, auch bei stark sich örtlich ändernden Feldern, wie dies der Fall ist, wenn neben stationären Prüfsonden oszillierende Prüfsonden eingesetzt werden. Die Zwischenschaltung der 3 mm starken Wand 4 aus austenitischem Stahl brachte nur eine geringfügige Änderung des Phasenabstandes zwischen Nutz- und Störsignalen mit sich, die ohne weiteres in Kauf genommen werden kann.

An sich ist es grundsätzlich möglich, bei den Prüfsonden 2 und 32 die Empfängerwicklungen 14-17 gegen die Erregerwicklung 19 auszutauschen, also den Erregerwechselstrom in die Wicklungen 14-17 einzuspeisen und die Wicklung 19 an die Auswerteeinrichtung 23 anzuschließen. Solange man die Prüfsonden einzeln betreibt, stellt sich kein wesentlicher Unterschied in den Ergebnissen ein. Ordnet man jedoch mehrere, z. B. nach Figur 5 drei Prüfsonden 32 nebeneinander auf einer gemeinsamen Grundplatte 41 an, so werden entscheidende Vorteile für die Betriebsweise erkennbar, bei den in die um den Zentralarm 13 gewundene Wicklung 19 eingespeist wird. Das hängt vor allem damit zusammen, daß bei dieser Betriebsweise zu allen Zeitpunkten die Magnetflüsse in den vier äußeren Armen 11 gleichsinnig gerichtet sind, während bei der anderen Betriebsweise die Magnetflüsse in den oberen und unteren Armen 11 stets entgegengesetzt gerichtet sind. Im ersten Falle tritt nur eine geringe Streuung der Feldlinien nach außen auf, im zweiten Falle ergibt sich eine merkliche Beeinflussung der Prüfsonden untereinander, die dazu führt, daß die Signale von schräg verlaufenden Rissen stark zurückgehen. Im vorliegenden Falle sind daher alle Wicklungen 19 mit dem Wechselstromgenerator 20 verbunden, während an die Anschlußdrähte der Wicklungen 14-17 jeweils Auswerteeinrichtungen angeschlossen sind. Dennoch zeigten sich anfangs beim gemeinsamen Betrieb der drei Prüfsonden 32 Reste einer gegenseitigen Beeinflussung, die darin bestanden, daß die Proportionalität zwischen Fehlertiefen und Fehlersignalhöhe sich verschlechterte. Die restliche gegenseitige Beeinflussung der Prüfsonden 32 konnte beseitigt werden, indem man bei benachbarten Prüfsonden die Polarität sowohl der Erregerwicklung 19 als auch der Empfängerwicklungen 14-17 abwechseln ließ. Im vorliegenden Falle vertauschte man einfach bei der mittleren Prüfsonde zum einen die Anschlüsse 44 der Wicklung 19, zum anderen die Anschlüsse 45 der Wicklungen 14-17.

Neben den bisher beschriebenen Prüfsonden sind auch noch andere Prüfsonden zur Ausführung der Erfindung möglich. Eine davon, Prüfsonde 50, ist in Figur 6 a in Unteransicht, in Figur 6 b in Seitenansicht dargestellt. An dem zylindrischen Ferritkern 51 sind durch kreuzweises Einschleifen zweier Schlitze 52, 53 vier Arme 54 entstanden, die mit Wicklungen 55-58 versehen wurden. Die Wicklungen 55-58 sind geschaltet wie bei den vorher beschriebenen Prüfsonden, nämlich die beiden in der Abtastrichtung nach Pfeil 8 vorderen (57, 58) im entgegengesetzten Wickelsinn wie die beiden hinteren Wicklungen 55, 56. Auf den Schaft des Kernes 51 ist eine Erregerwicklung 59 aufgetragen. Die Betriebsweise der Prüfsonde 50 ist die gleiche wie bei den zuvor beschriebenen Prüfsonden.

Obwohl bei allen bisher beschriebenen Prüfsonden getrennte Empfänger- und Erregerwicklungen benutzt wurden, ist das für die Ausführung der Erfindung nicht grundsätzlich erforderlich. Statt eine besondere Wicklung zur Herstellung der Wirbelströme im Prüfteil zu benutzen kann man auch die über den vier Armen des Sondenkernes liegenden Wicklungen in Brückschaltung betreiben. Man wird dann die zur Erregung der Wirbelströme nötige Wechselspannung an eine der beiden Brückendiagonalen anlegen und die Prüfsignale an der anderen Brückendiagonale abnehmen, wie dies dem Fachmann geläufig ist. Ebenso ist es auch denkbar, daß jeder der vier Arme eine Erreger- und eine Empfängerwicklung trägt.

**Ansprüche**

1. Prüfsondenanordnung zum Abtasten der Oberfläche (5) eines metallischen Prüfteiles (6) in einer bestimmten vorgegebenen Abtastrichtung (8) auf Fehler (30, 31) mit mindestens einer Wirbelstromprüfsonde (2 ; 32 ; 50), die letztere bestehend aus einem ferromagnetischen Kern mit vier auf die Oberfläche gerichteten, im wesentlichen gleich aufgebauten und gleich dimensionierten Armen (11 ; 54), aus Mitteln (19, 20 ; 59) zum Erzeugen von Wirbelströmen im Prüfteil, und aus Empfängerwicklungen (14-17 ; 55-58), die in differenzbildender Schaltung auf die Arme (11) aufgebracht sind und in die in Abhängigkeit von den Wirbelströmen im Prüfteil elektrische Signale induziert werden, dadurch gekennzeichnet, daß jeder der genannten Arme (11) mit einer Empfängerwicklung (14-17 ; 55-58) versehen ist, daß die Schwerpunkte (12) der Querschnittsflächen der Arme (11) mit den vier Ecken eines Rechteckes zusammenfallen, dessen Seiten senkrecht bzw. parallel zur Abtastrichtung (8) orientiert sind und daß jeweils die beiden Empfängerwicklungen (16, 17 ; 57, 58) der in der Abtastrichtung (8) vorderen Arme wie auch die beiden Empfängerwicklungen (14, 15 ; 55, 56) der in der Abtastrichtung hinteren Arme hinsichtlich der Signalbildung sich unterstützend geschaltet sind, während die Gesamtheit der beiden vorderen Empfängerwicklungen (16, 17 ; 57, 58) hinsichtlich der Signalbildung gegen die Gesamtheit der beiden hinteren Empfängerwicklungen (14, 15 ; 55, 56) arbeitend geschaltet ist.

2. Prüfsondenanordnung nach Anspruch 1, dadurch gekennzeichnet, daß die parallel bzw. senkrecht zur Abtastrichtung (8) verlaufenden Seiten des genannten Rechteckes ungleich lang sind und daß die längeren Seiten des Rechteckes senkrecht zur Abtastrichtung verlaufen.

3. Prüfsondenanordnung nach Anspruch 1, dadurch gekennzeichnet, daß der ferromagnetische Kern aus einer Hälfte eines kommerziell erhältlichen magnetischen Schalenkernes hergestellt ist, in dessen äußerer Schale durch bereits vorhandene und/oder neu eingebrachte Einschnitte (9, 10) die vier Arme (11) gebildet sind.

4. Prüfsondenanordnung nach Anspruch 3, dadurch gekennzeichnet, daß die in der Abtastrichtung (8) verlaufenden Einschnitte (10) breiter als die anderen Einschnitte (9) sind.

5. Prüfsondenanordnung nach Anspruch 3 oder 4, dadurch gekennzeichnet, daß ein zusätzlicher Zentralarm (13) des magnetischen Schalenkernes eine weitere Wicklung (19) trägt, die zur Erzeugung der Wirbelströme benutzt wird und zu diesem Zweck mit einem Wechselstromgenerator (20) verbunden ist, und daß die Empfängerwicklungen (14-17 ; 55-58) in Serie geschaltet sind, wobei die vorderen Empfängerwicklungen (16, 17 ; 57, 58) entgegengesetzt zu den hinteren (14, 15 ; 55, 56) gewickelt sind.

6. Prüfsondenanordnung nach Anspruch 5, dadurch gekennzeichnet, daß bei mehreren nebeneinander angeordneten Prüfsonden (32) sowohl die Erregerwicklung (19) als auch die Serienschaltung der Empfängerwicklungen (14-17) zweier benachbarter Prüfsonden (32) jeweils umgekehrt gepolt sind.

7. Prüfsondenanordnung nach einem der Ansprüche 3 bis 6, dadurch gekennzeichnet, daß in der Nachbarschaft eines oder mehrerer Arme (11) ein Ferritkern (25) angebracht ist, dessen Abmessungen klein sind gegenüber denen des Armes (11) und dessen Lage bezüglich des Arms (11) zu Abgleichzwecken veränderbar ist.

8. Prüfsondenanordnung nach Anspruch 1 oder 2, dadurch gekennzeichnet, daß der ferromagnetische Kern aus einem Prisma (51) von beispielsweise kreisförmigem oder rechteckigem Profil hergestellt wurde und die Arme (54) durch Herausarbeiten von sich kreuzenden Einschnitten (52, 53) entstanden sind.

9. Prüfsondenanordnung nach Anspruch 8, dadurch gekennzeichnet, daß eine zusätzliche Wicklung (59) als Erregerwicklung um das Profil des Prismas (51) gewunden ist.

10. Prüfsondenanordnung nach einem der Ansprüche 1-4, 8 oder 9, dadurch gekennzeichnet, daß die Empfängerwicklungen (14-17 ; 55-58) um die vier Arme (11 ; 54) zu einer Brücke geschaltet sind, deren eine Diagonale von einer Wechselstromquelle (20) gespeist wird und deren andere Diagonale mit einer Auswerteinrichtung (23) verbunden ist.

11. Prüfsondenanordnung zum Abtasten der Oberfläche (5) eines metallischen Prüfteiles (6) in einer bestimmten vorgegebenen Abtastrichtung (8) auf Fehler (31, 31), mit mindestens einer Wirbelstromprüfsonde (2 ; 32), die letztere bestehend aus einem ferromagnetischen Kern mit vier auf die Oberfläche gerichteten, im wesentlichen gleich aufgebauten und gleich dimensionierten Armen (11), aus Mitteln (14-17, 20) zum Erzeugen von Wirbelströmen im Prüfteil, welche auf die Arme aufgebrachte und mit einem Wechselspannungssignal beaufschlagte Erregerwicklungen (14-17) umfassen, und aus einer Empfängerwicklungsanordnung (19), in die in Abhängigkeit von den Wirbelströmen im Prüfteil elektrische Signale induziert werden, dadurch gekennzeichnet, daß jeder der genannten Arme (11) mit einer Erregerwicklung (14, 15, 16, 17) versehen ist, daß die Schwerpunkte (12) der Querschnittsflächen der genannten Arme (11) mit den vier Ecken eines Rechteckes zusammenfallen, dessen Seiten senkrecht bzw. parallel zur Abtastrichtung (8) orientiert sind, daß jeweils die beiden Erregerwicklungen (16, 17) der in der Abtastrichtung (8) vorderen Arme (11) wie auch die beiden Erregerwicklungen (14, 15) der in der Abtastrichtung hinteren Arme (11) hinsichtlich der Signalbildung sich unterstützend geschaltet sind, während die Gesamtheit der beiden vorderen Wicklungen (16, 17 ; 57, 58) hinsichtlich der Signalbildung gegen die Gesamtheit der beiden hinteren Wicklungen (14, 15 ; 55, 56) arbeitend geschaltet ist, und daß die Empfängerwicklungsanordnung aus einer Wicklung (19) besteht, die auf einem weiteren, auf die Oberfläche gerichteten zentralen Arm des ferromagnetischen Kerns angeordnet ist.

**Claims**

1. A test probe assembly for scanning the surface (5) of a metal testpiece (6) in a given predetermined scanning direction (8) for defects (30, 31), comprising at least one eddy current test probe (2 ; 32 ; 50), the test probe comprising a ferromagnetic core with four arms (11 ; 54) which are directed towards the surface and which are of substantially the same construction and same dimensions, means (19, 20 ; 59) for producing eddy currents in the testpiece, and receiving windings (14-17 ; 55-58) which are mounted on the arms (11) in a difference-forming circuit and in which electrical signals are induced in dependence on the eddy currents in the testpiece, characterised in that each of said arms (11) is provided with a receiving winding (14-17 ; 55-58), that the centres of gravity (12) of the cross-sectional areas of the arms (11) coincide with the four corners of a rectangle, the sides of which are oriented normal and parallel to the scanning direction (8) respectively, and that the two receiving windings (16, 17 ; 57, 58) of the front arms in the scanning direction (8), and the two receiving windings (14,15 ; 55, 56) of the rear arms in the scanning direction, are respectively connected in such a way as to assist each other in regard to signal formation, while the assembly of the two front receiving windings (16, 17 ; 57, 58) is connected to operate in regard to signal formation against the assembly of the two rear receiving windings (14, 15 ; 55, 56).

2. A test probe assembly according to claim 1 characterised in that the sides of said rectangle which respectively extend parallel and normal to the scanning direction (8) are unequal in length and that the longer sides of the rectangle extend normal to the scanning direction.

3. A test probe assembly according to claim 1 characterised in that the ferromagnetic core is made from half a commercially obtainable magnetic shell core, the four arms (11) being formed in the outer shell of said core by incisions (9, 10) which are already present and/or freshly formed therein.

4. A test probe assembly according to claim 3 characterised in that the incisions (10) which extend in the scanning direction (8) are wider than the other incisions (9).

5. A test probe assembly according to claim 3 or claim 4 characterised in that an additional central arm (13) of the magnetic shell core carries a further winding (19) which is used to produce the eddy currents and for that purpose is connected to an alternating current generator (20), and that the receiving windings (14-17 ; 55-58) are connected in series, the front receiving windings (16, 17 ; 57, 58) being wound in the opposite direction to the rear receiving windings (14, 15 ; 55, 56).

6. A test probe assembly according to claim 5 characterised in that, when the assembly comprises a plurality of test probes (32) which are arranged one beside the other, both the energising winding (19) and the series connection of the receiving windings (14-17) of two adjacent test probes (32) are of respectively opposite polarities.

7. A test probe assembly according to one of claims 3 to 6 characterised in that a ferrite core (25) is disposed in the vicinity of one or more arms (11), the dimensions of the ferrite core (25) being small in relation to those of the arm (11) and the position of the ferrite core being variable with respect to the arm (11), for tuning purposes.

8. A test probe assembly according to claim 1 or claim 2 characterised in that the ferromagnetic core was made from a prism (51) of for example circular or rectangular configuration, and the arms (54) are formed by machining intersecting incisions (52, 53).

9. A test probe assembly according to claim 8 characterised in that an additional winding (59) is wound around the configuration of the prism (51), as an energising winding.

10. A test probe assembly according to one of claims 1 to 4, 8 or 9 characterised in that the receiving windings (14-17 ; 55-58) around the four arms (11 ; 54) are connected to form a bridge circuit, one diagonal of which is supplied by an alternating current source (20) while the other diagonal is connected to an evaluation means (23).

11. A test probe assembly for scanning the surface (5) of a metal testpiece (6) in a given predetermined direction (8) for defects (30, 31), having at least one eddy current test probe (2 ; 32), the test probe comprising a ferromagnetic core having four arms (11) which are directed towards the surface and which are of substantially the same construction and same dimensions, means (14-17, 20) for producing eddy currents in the test piece, which include energising windings (14-17) disposed on the arms and supplied with an a.c. voltage signal, and a receiving winding arrangement (19) in which electrical signals are induced in dependence on the eddy currents in the testpiece, characterised in that each of said arms (11) is provided with an energising winding (14, 15, 16, 17), that the centres of gravity (12) of the cross-sectional areas of said arms (11) coincide with the four corners of a rectangle, the sides of which are oriented normal and parallel respectively to the scanning direction (8), that the two energising windings (16, 17) of the front arms (11) in the scanning direction (8), and the two energising windings (14, 15) of the rear arms (11) in the scanning direction, are connected in such a way as to assist each other with respect to signal formation, while the assembly of the two front windings (16, 17 ; 57, 58) is connected to operate with respect to signal formation against the assembly of the two rear windings (14, 15 ; 55, 56), and that the receiving winding arrangement comprises a winding (19) arranged on a further central arm of the ferromagnetic core, said arm being directed towards the surface.

## Revendications

1. Sonde de contrôle pour l'exploration de la surface (5) d'une pièce métallique d'essai (6) dans une direction d'exploration (8) déterminée à l'avance, pour la détection de défauts (30, 31), comprenant au moins une sonde de contrôle à courants de Foucault (2, 32, 50) constituée par un noyau ferromagnétique comportant quatre bras (11, 54) ayant essentiellement la même forme et les mêmes dimensions et tournés vers la surface, des dispositifs (19, 20, 59) permettant de produire des courants de Foucault dans la pièce d'essai et des enroulements de réception (14-17, 55-58) qui sont montés en branchement différentiel sur les bras (11) et dans lesquels des signaux électriques sont produits par induction en fonction des courants de Foucault parcourant la pièce d'essai, caractérisée en ce que chacun des bras (11) porte un enroulement de réception (14-17, 55-58), que les centres de gravité (12) des surfaces des sections des bras (11) coïncident avec les quatre sommets d'un rectangle dont les côtés sont perpendiculaires et parallèles à la direction d'exploration (8) et que les deux enroulements de réception (16, 17, 57, 58) des bras situés en avant dans la direction d'exploration (8) et les deux enroulements de réception (14, 15, 55, 56) des bras situés en arrière dans la direction d'exploration sont branchés chacun de manière à se renforcer pour la production des signaux tandis que l'ensemble des deux enroulements de réception situés à l'avant (16, 17, 57, 58) est branché de manière à s'opposer pour la production des signaux à l'ensemble des deux enroulements de réception arrière (14, 15, 55, 56).

2. Sonde de contrôle selon la revendication 1, caractérisée en ce que les côtés du rectangle déjà mentionné parallèles et perpendiculaires à la direction d'exploration (8) n'ont pas la même longueur et que les côtés les plus longs du rectangle sont perpendiculaires à la direction d'exploration.

3. Sonde de contrôle selon la revendication 1, caractérisée en ce que le noyau ferromagnétique est fabriqué avec la moitié d'un noyau feuilleté du commerce, dans l'enveloppe extérieur duquel quatre bras (11) sont formés à partir d'entailles (9, 10) déjà existantes et/ou nouvellement faites.

4. Sonde de contrôle selon la revendication 3, caractérisée en ce que les entailles (10) faites dans la direction d'exploration (8) sont plus larges que les autres entailles (9).

5. Sonde de contrôle selon l'une quelconque des revendications 3 ou 4, caractérisée en ce qu'un bras central supplémentaire (13) du noyau feuilleté magnétique porte un autre enroulement (19) qui sert à produire des courants de Foucault et est relié à cet effet à un générateur de courant alternatif (20) et que les enroulements de réception (14-17, 55-59) sont branchés en série, les enroulements de réception avant (16, 17, 57, 58) étant enroulés dans un sens contraire à celui des enroulements arrière (14, 15, 55, 56).

6. Sonde de contrôle selon la revendication 5, caractérisée en ce que lorsque plusieurs sondes de contrôle (32) sont disposées à côté les unes des autres l'enroulement d'excitation (19) et la série des enroulements de réception (14-17) de deux sondes de contrôle voisines (32) ont des polarités opposées.

7. Sonde de contrôle selon l'une quelconque des revendications 3 à 6, caractérisée en ce qu'au voisinage d'un ou de plusieurs bras (11) l'installation comporte un noyau de ferrite (25) dont les dimensions sont petites par rapport à celles du bras (11) et dont la position par rapport au bras (11) peut être modifiée pour réaliser une compensation.

8. Sonde de contrôle selon l'une quelconque des revendications 1 ou 2, caractérisée en ce que le noyau ferromagnétique est constitué par un prisme (51) ayant par exemple un profil circulaire et rectangulaire et que les bras (54) ont été obtenus à partir d'entailles (52, 53) croisées.

9. Sonde de contrôle selon la revendication 8, caractérisée en ce qu'un enroulement supplémentaire (59) constituant un enroulement d'excitation est enroulé autour du profil du prisme (51).

10. Sonde de contrôle selon l'une quelconque des revendications 1 à 4, 8 ou 9, caractérisée en ce que les enroulements de réception (14-17, 55-58) et les quatre bras (11, 54) sont branchés en pont dont l'une des diagonales est alimentée par une source de courant alternatif (20) et dont l'autre diagonale est reliée à une installation (23) d'interprétation des signaux.

11. Sonde de contrôle pour l'exploration de la surface (5) d'une pièce métallique d'essai (6) dans une direction d'exploration (8) déterminée à l'avance, pour la détection de défauts (30, 31) comprenant au moins une sonde de contrôle par courants de Foucault (2, 32) constituée par un noyau ferromagnétique comportant quatre bras (11) ayant essentiellement la même forme et les mêmes dimensions et tournés vers la surface, par des dispositifs (14-17, 20) permettant de produire des courants de Foucault dans la pièce d'essai, et comprenant des enroulements d'excitation (14-17) montés sur les bras et recevant un signal de tension alternative, et par un dispositif d'enroulements de réception (19) dans lequel des signaux électriques sont produits par induction en fonction des courants de Foucault parcourant la pièce d'essai, caractérisé en ce que chacun des bras (11) mentionnés ci-dessus porte un enroulement d'excitation (14, 15, 16, 17), que les centres de gravité (12) des surfaces des sections des bras (11) coïncident avec les quatre sommets d'un rectangle dont les côtés sont perpendiculaires et parallèles à la direction d'exploration (8), que les deux enroulements d'excitation (16, 17) des bras (11) situés en avant dans la direction d'exploration (8) et les deux enroulements d'excitation (14, 15) des bras (11) situés en arrière dans la direction d'exploration sont branchés chacun de manière à se renforcer pour la production des signaux tandis que l'ensemble des deux enroulements avant (16, 17, 57, 58) est branché de manière à s'opposer à l'ensemble des deux enroulements arrière (14, 15, 55, 56) et que le dispositif d'enroulement de réception est constitué par un enroulement (19) qui est monté sur un autre bras du noyau ferromagnétique, central et tourné vers la surface.

**0 027 525**

Fig.1b

Fig.1a

Fig. 3

Fig. 4

Fig. 5

Fig. 6 b

Fig. 6 a

Fig. 2a

Fig. 2 b

2